# EUROPEAN PATENT APPLICATION

(11) **EP 2 644 339 A1**
(43) Date of publication of application: **02.10.2013**
(21) Application number: 12002275.1
(22) Date of filing: 29.03.2012
(51) Int. Cl.: B27M 3/00, B27D 1/00, B27G 11/00, B27D 1/08, B27C 5/00

(54) **Contoured veneer and method of making same**

(71) Applicant: HD Wood Technologies Limited, Valletta (MT)
(72) Inventor: Wagoner, Glenn L., Darlington PA 16115-1649 (US)
(74) Representative: Ricker, Mathias

(57) **Abstract**

Method of making a contoured wood sheet, the method comprising at least steps (i) to (iv):
(i) providing wood sheets, wherein the top side and the rear side of the wood sheets are spaced apart from one another by a thickness, respectively;
(ii) reducing the thickness between the top side and the rear side in at least a part of at least one wood sheet provided in step (i) such that the sheet has in at least a part of the sheet a tapered or a curved form;
(iii) gluing the sheet obtained in step (ii) to another intermediate sheet obtained in step (ii); or gluing the intermediate sheet obtained in step (ii) to a wood sheet provided in step (i); such that an adhesion layer is formed between respective top and reae sides;
(iv) slicing the block obtained in step (iii) such that the slicing plane extends perpendicularly to said adhesion layers, whereby the contoured wood sheet is obtained.

## Description

The invention relates to a method of making a contoured wood sheet from a non-contoured wood sheet, to the contoured wood sheet as such, to a laminated block of wood sheets from which the contoured wood sheet is obtained by slicing, and to a device for processing the non-contoured wood sheet in the method according to the invention.

The manufacture of veneers is a production technique for the manufacture of decorative, high-quality surface materials made from real wood. In the conventional manufacture, logs are decorticated or de-barked. Said logs are sawn into halves, thirds, quarters or other parts of a log (so called *"flitches"*). The flitches are mostly subsequently watered for several days at an increased temperature in order to prepare them for the subsequent cutting to veneer, the so-called slicing. Dependent on the cutting process, sliced veneer (horizontal or vertical slicing), peeled veneer (rotary slicing) or staylog (eccentrical rotary slicing) may be produced. The obtained raw veneer typically has a thickness of from about 0.1 mm to 3.0 mm, preferably of from 0.45 mm to 0.8 mm.

So-called reconstituted veneers are also known. In the manufacturing process thereof, it is aspired to achieve a repeatable decorative property, a constant quality and a dimensional accuracy in order to be able to better predict the characteristics of the final product veneer. Conventionally manufactured veneers such as peeled veneers, optionally after a pretreatment such as dyeing or baking of structures, are glued to each other, and the so obtained material is subsequently re-sliced. Thereby, a veneer surface can be created having a mostly predetermined surface structure. Typically, species with low density have to be used such as poplar, ayous, samba, otherwise the cutting process may be disadvantageously affected or even does not work at all.

In another conventional process for the manufacture of reconstituted veneer, sliced or peeled hardwood veneer is laminated to a block by gluing, and is subsequently re-sliced. The thus made veneer sheet is composed of a multitude of rod-like, straight wood elements, which are glued together via their longitudinal edges, wherein the wood elements have the length and the thickness of the veneer sheet. Since dried veneer is used, the resulting sheet is usually brittle and thus difficult to handle. In particular in direction of the longitudinal edges, which are glued to one another and which extend in parallel to one another, the obtained veneer is exposed to the risk of breaking when subjected to stress. Thus, processing is limited with regard to parameters such as width and length of the veneer. Typically, such a veneer needs to be glued on a substrate before further processing. This hampers the usability of the veneer and further adds costs to the manufacturing process.

The blocks used in the manufacture of reconstituted veneer typically have a cuboid form or are cuboids.

Methods and veneers obtained by slicing a laminated block of veneer sheets are e.g. further known from EP 1 688 228 and EP 2 353 819.

One problem to be solved by the present invention is to create a wood sheet such as a veneer, which is less brittle than veneers known from the state of the art, i.e., which has an improved mechanical stability. Additionally, the appearance, structure and aesthetics of said wood sheet should not only be predetermined by the used log, respectively raw material, but also should be definable by the applicant's or designer's wish.

### First Aspect of the Invention

According to a ***first aspect*** of the invention, the problem is solved by a method of making a contoured wood sheet, the contoured wood sheet having a length, a height and a width, and a top side and a rear side, which are spaced apart from one another by the height; wherein the width varies across at least a part of the length to define the contour of the contoured sheet; and the contoured wood sheet comprises wood elements, the wood elements having the length and the height of the contoured wood sheet; wherein the width of at least one wood element varies across its length; wherein wood elements are glued together via edges extending in the direction of the length of the wood elements; the method comprising at least steps (i) to (iv):
(i) providing wood sheets, the wood sheets having a front edge and a rear edge, and a top side and a rear side extending between the front edge and the rear edge, wherein the top side and the rear side are spaced apart from one another by a uniform thickness, respectively;
(ii) reducing the thickness between the top side and the rear side in at least a part of at least one wood sheet provided in step (i) such that the sheet has in at least a part of the top side or the rear side, or the top side and the rear side, a tapered or a curved form, whereby an intermediate wood sheet is obtained;
(iii) gluing the intermediate sheet obtained in step (ii) to another intermediate sheet obtained in step (ii); wherein the gluing is performed such that a top side is glued to a rear side, wherein an adhesion layer is formed between said top side and said rear side; or a top side is glued to a top side, wherein an adhesion layer is formed between said top sides; whereby a block of wood is obtained comprising intermediate sheets from step (ii), which are glued together;
(iv) slicing the block obtained in step (iii) such that the slicing plane extends perpendicularly to said adhesion layers, whereby the contoured wood sheet is obtained.

In an alternative, in step (iii), the intermediate sheet obtained in step (ii) is glued to a wood sheet provided in step (i); wherein the gluing is performed such that a top side is glued to a rear side, wherein an adhesion layer is formed between said top side and said rear side; or a top side is glued to a top side, wherein an adhesion layer is formed between said top sides; whereby a block of wood is obtained comprising intermediate sheets from step (ii) and wood sheets from step (i), which are glued to one another.

In a further alternative, in step (iii), the intermediate sheet obtained in step (ii) is glued to another intermediate sheet obtained in step (ii); wherein the gluing is performed such that a top side is glued to a rear side, wherein an adhesion layer is formed between said top side and said rear side; or a top side is glued to a top side, wherein an adhesion layer is formed between said top sides; and the intermediate sheet obtained in step (ii) is glued to a wood sheet provided in step (i); wherein the gluing is performed such that a top side is glued to a rear side, wherein an adhesion layer is formed between said top side and said rear side; or a top side is glued to a top side, wherein an adhesion layer is formed between said top sides; whereby a block of wood is obtained comprising intermediate sheets from step (ii) and a wood sheet provided in step (i), which are glued together.

By means of such method, a veneer may be created which is composed of a multitude of rod-like wood elements, which are glued together via their longitudinal edges, wherein the wood elements have the length and the height of the veneer sheet and wherein the width of the sheets varies across its length. Without being bound by a theory, it is believed that the increased mechanical stability of a veneer made according to the method of the invention is due to the fact that at least a part of the longitudinal edges of the wood elements, which are glued to one another, do not extend in parallel to one another. Thus, the obtained veneer is less exposed to risk of breaking in longitudinal direction of the wood elements, i.e. between two edges that are glued together, when subjected to stress.

The contoured wood sheet made according to the method of the invention has a length, a height and a width, and a top side and a rear side, which are spaced apart from one another by the height, wherein the width varies across at least a part of the length to define the contour of the contoured sheet. The contoured wood sheet is composed of wood elements, wherein the wood elements have the length and the height of the contoured wood sheet, wherein the width of at least one wood element varies across its length. The wood elements are present in the contoured wood sheet made according to the method of the invention in a manner, in which the wood elements are glued together via edges extending in the direction of the length of the wood elements.

Preferably, the contoured wood sheet is provided in the form of a veneer sheet.

The following *"terms"* are definitions as used in this disclosure.

The term "*wood*" encompasses softwood and hardwood. The term *"hardwood"* comprises the wood of broadleaf trees. Examples of hardwood are, but not limited to, oak, maple and beech.

The term *"wood sheet"* encompasses any piece of wood having a laminarly developed top side and rear side. Said top side and said rear side are spaced from one another by the thickness dimension of the sheet. Preferably, the thickness throughout the sheet is constant or is nearly constant. The term *"constant"* is synonymously used to the term *"uniform".* This means that the top side and the rear side preferably are in parallel towards each other. There is no restriction concerning said thickness as long as the length and the width of said wood sheets are larger than said thickness. The wood sheet may e.g. provided in the form of a board-like sheet.

The term *"contoured wood sheet"* encompasses a wood sheet having a length, a height and a width, and a top side and a rear side, which are spaced apart from one another by the height, wherein the width varies across at least a part of the length to define the contour of the contoured sheet.

The term *"length"* encompasses the shortest distance between two fictive planes between which the contoured sheet may be arranged such that the edges of said contoured wood sheet, which are formed by the end faces of the wood elements, are arranged inside these planes. Thus, the wood elements composing the contoured wood sheet have the same length as the contoured wood sheet.

The term *"top side" and "rear side"* encompasses the surface of the wood sheet, which extends between the edges of the contoured wood sheet. The terms are interchangeably used herein.

The term *"element"* encompasses the members or constituents of the contoured wood sheet. The contoured wood sheet is composed of elements. Besides wood elements, elements consisting of a material different from wood may be contained in the contoured wood sheet.

The term *"wood element"* encompasses an element which is made from wood or which comprises wood.

### Step (i)

Step (i) requires to provide wood sheets, the wood sheets having a front edge and a rear edge, and a top side and a rear side extending between the front edge and the rear edge, wherein the top side and the rear side are spaced apart from one another by a uniform thickness, respectively.

Preferably, the wood sheets provided in step (i) are non-contoured wood sheets. The term *"non-contoured"* as used in this disclosure encompasses a wood sheet having a length, a height and a width, and a top side and a rear side, which are spaced apart from one another by the height, wherein the width does not vary across at least a part of the length of the wood sheet. Preferably, a non-contoured wood sheet has a square or a rectangular shape.

Such wood sheet, preferably in the form of a veneer, may be produced according to a process as mentioned in the prior art section, i.e. by slicing a log or a flitch. However, such sheet may also be provided in the form of a sawn board that e.g. is obtained from a log by sawing.

Fundamentally, arbitrary wood sheets can be employed in step (i). For example, wood sheets from varying solid wood parts of a log can be employed. The thickness or *"gage"* of such solid wood sheets is not critical for the process according to the invention.

It is possible to provide in step (i) wood sheets, preferably non-contoured wood sheets, which comprise different wood species. It is also possible to provide wood sheets, preferably non-contoured wood sheets, each of which is made from a different wood species. If wood sheets of different wood species are used in step (i), it is possible to generate from step (i) via steps (ii) to (iv) veneers or veneer patterns, which are striated, thin, linear looking veneer patterns. Such veneers and veneer patterns may be termed as *"industrial inlays"* or *"reconstituted veneers"* as discussed in the prior art section.

The wood sheets provided in step (i) may have a different color or different colors. They may have the color of the original wood, however, may also be artificially dyed.

### Step (ii)

Step (ii) requires the reduction of the thickness between the top side and the rear side in at least a part of at least one wood sheet provided in step (i), preferably a non-contoured wood sheet, such that the sheet has in at least a part of the top side or the rear side, or the top side and the rear side, a tapered or curved form. In the following, this wood sheet obtained in step (ii) is also termed as *"intermediate wood sheet".*

The term *"tapered form"* encompasses a wood sheet in which the thickness of at least a part of the top side or the rear side, or the top side and the rear side, is reduced such to result in a V-shape.

The term *"curved form"* encompasses a wood sheet in which the thickness of at least a part of the top side or the rear side, or the top side and the rear side, is reduced such to result in an arcuated shape.

The intermediate wood sheet obtained in step (ii) may both have a curved and a tapered form.

Basically, any method of processing wood known in the art for reducing the thickness between the top side and the rear side may be used, preferably methods which consist of or comprise the mechanical reduction of said thickness. Preferred methods are sanding, milling, or planing. Sanding is particularly preferred.

### Step (iii)

Step (iii) requires the gluing of the intermediate sheet obtained in step (ii) to another intermediate sheet obtained in step (ii) such that a top side is glued to a rear side, wherein an adhesion layer is formed between said top side and said rear side, or a top side is glued to a top side, wherein an adhesion layer is formed between said top sides, whereby a block of wood is obtained comprising intermediate sheets from step (ii), which are glued to one another.

In an alternative, it is possible to glue the intermediate sheet obtained in step (ii) to a wood sheet provided in step (i) such that a top side is glued to a rear side, wherein an adhesion layer is formed between said top side and said rear side, or a top side is glued to a top side, wherein an adhesion layer is formed between said top sides, whereby a block of wood comprising intermediate sheets from step (ii) and sheets from step (i), which are glued to one another.

In a further alternative, it is possible to glue the intermediate sheet obtained in step (ii) to another intermediate sheet obtained in step (ii) such that a top side is glued to a rear side, wherein an adhesion layer is formed between said top side and said rear side, or a top side is glued to a top side, wherein an adhesion layer is formed between said top sides; and to glue the intermediate sheet obtained in step (ii) to a wood sheet provided in step (i) such that a top side is glued to a rear side, wherein an adhesion layer is formed between said top side and said rear side, or a top side is glued to a top side, wherein an adhesion layer is formed between said top sides, whereby a block of wood comprising intermediate sheets from step (ii) and sheets from step (i), which are glued to one another.

The term *"block"* encompasses a composite made from laminated wood sheets, which are glued to one another via top sides and rear sides, or top sides and rear sides.

The term *"adhesion layer"* defines the layer of adhesive between a top side or a top side and a rear side of the wood sheets, which are adhered to each other, i.e. an adhesion layer between a top side or rear side of two intermediate wood sheets from step (ii), or an adhesion layer between a top side or rear side of an intermediate layer from step (ii) and a wood sheet from step (i).

The formed block is composed of intermediate sheets obtained in step (ii) that are glued to one another, wherein a top side is glued to a rear side, wherein an adhesion layer is formed between said top side and said rear side; or a top side is glued to a top side, wherein an adhesion layer is formed between said top sides. Thus, the block comprises wood sheets in which the thickness has been reduced such that each sheet has in at least a part of the top side or the rear side, or the top side and the rear side, a tapered or a curved form.

In an alternative, the formed block is composed of at least one intermediate sheet obtained in step (ii) and at least one wood sheet provided in step (i), wherein a top side is glued to a rear side, wherein an adhesion layer is formed between said top side and said rear side; or a top side is glued to a top side, wherein an adhesion layer is formed between said top sides. Thus, the block comprises at least one wood sheet in which the thickness has been reduced such that said sheet has in at least a part of the top side or the rear side, or the top side and the rear side, a tapered or a curved form.

Preferably, the gluing according to step (iii) is performed by applying pressure.

Suitable glues are known from the prior art. Preferably, the glues and the method of glueing may be used as disclosed in EP 2 353 819.

Preferably, the gluing may be performed in a suitable device such as a compression device such as a compression-molding device.

Prior to performing step (iv), the block obtained in step (iii) may be processed such that e.g. edges are clipped or planed.

### Step (iv)

Step (iv) requires the slicing of the block obtained in step (iii) such that the slicing plane extends transversely, in particular perpendicularly, to said adhesion layers, whereby the contoured wood sheet is obtained.

The term *"slicing"* is interchangeably used to the term *"cutting".*

Said slicing or cutting relates to the formation of a wood sheet such as a veneer from a flitch or a log or a block by means of a knife, a blade or the like. In the context of the present invention, the intermediate wood sheets such as veneers in the form of a block or flitch are cut or sliced, however not sawn or otherwise formed in a fiber removing (machining) process.

In a preferred embodiment, the slicing in step (iv) is performed such that the slicing plane does not only extend perpendicularly to said adhesion layers, but such that it extends in parallel to the length of the wood elements from which the contoured wood sheet is composed. As result, the contoured wood sheet has a uniform or constant height.

Accordingly, in an alternative, the method according to the invention comprises a step (iv):
(iv) slicing the block obtained in step (iii) such that the slicing plane is perpendicularly arranged to said adhesion layers, i.e. it extends perpendicularly to said adhesion layers, whereby the contoured wood sheet is obtained; and wherein the slicing plane further extends in parallel to the length of the wood elements from which the contoured wood elements is composed of such that said contoured wood sheet has a constant height.

### Embodiments of the method according to the invention

In a first embodiment, the contoured wood sheet is a veneer sheet.

The term *"veneer"* is used in the meaning as discussed in the prior art section above. Accordingly, a veneer represents a distinct species of a wood sheet having a thickness preferably of from 0.1 mm to 3 mm, more preferably of from about 0.45 mm to 2.5 mm, still more preferably of from 0.45 mm to 0.8 mm. The terms *"veneer sheet"* or *"sheet* of a *veneer" are* interchangeably used with the term *"veneer".*

Preferably, the length of the contoured veneer sheet is in the range of from 30 to 100 cm, the height is in the range of from 0.1 mm to 3 mm, preferably of from about 0.45 mm to 2.5 mm, more preferably of from 0.45 mm to 0.8 mm, and the width varies across the length between 5 and 50 cm.

In a second embodiment of the method according to the invention, the wood sheet provided in step (i), which preferably is a non-contoured wood sheet, is a veneer sheet.

The term *"veneer"* is used in the meaning as discussed in the prior art section above.

Accordingly, a veneer represents a distinct species of a wood sheet having a thickness of from 0.1 mm to 3 mm, preferably of from about 0.45 mm to 2.5 mm, more preferably of from 0.45 mm to 0.8 mm.

In a third embodiment of the invention, the wood sheet provided in step (i) is a veneer sheet, which is provided in the form of a board-like plane veneer sheet. The sheet preferably has a thickness of from 0.1 mm to 3 mm, more preferably of from about 0.45 mm to 2.5 mm, still more preferably of from 0.45 mm to 0.8 mm; or it has a thickness preferably of from 0.1 mm to 3 mm, more preferably of from about 0.45 mm to 2.5 mm, still more preferably of from 0.45 mm to 0.8 mm; and a length preferably up to 300 cm, or up to 250 cm, or of from 50 to 300 cm, or of from 50 to 250 cm, or of from 50 to 100 cm, or of from 50 to 150 cm, wherein the width preferably is of from 2 to 20 cm, respectively.

In an alternative, the veneer sheet has a thickness of from 0.1 to 3 mm; or the veneer sheet has a thickness of from 0.1 to 3 mm and a length of from 50 to 300 cm and a width of from 2 to 20 cm.

In a fourth embodiment of the method according to the invention, the reducing of the thickness between the top side and the rear side of the wood sheet provided in step (i) according to step (ii) comprises mechanically reducing said thickness, preferably by sanding, or milling, or planing.

Respective means and devices for performing said step are known in the art. Said mechanically reducing may be performed by hand or by machine.

Preferably, reduction of the thickness by sanding is preferred. Preferably, sanding is performed by using a sander. In one embodiment, sanding is performed by using a sander controlled by a computerized numerical control machine (CNC machine).

Preferably, the reducing of the thickness between the top side and the rear side of the wood sheet provided in step (i) according to step (ii) comprises mechanically reducing said thickness by sanding.

In an alternative, the reducing of the thickness between the top side and the rear side of at least a part of the wood sheet provided in step (i) according to step (ii) comprises mechanically reducing the thickness of at least a part of the top side or of the rear side of the wood sheet, preferably the sanding of at least a part of the top side or of the rear side of the wood sheet.

In a further alternative, the reducing of the thickness between the top side and the rear side of the wood sheet provided in step (i) according to step (ii) comprises mechanically reducing the thickness of at least a part of the top side and of at least a part of the rear side of the wood sheet, preferably the sanding of at least a part of the top side of the wood sheet and of at least a part of the rear side of the wood sheet.

In a fifth embodiment of the method according to the invention, in step (ii), the wood sheet is provided on a support, the support comprising a clamping device and a surface, and the non-contoured wood sheet is fixed in the clamping device such that the front edge or rear edge is clamped into the clamping device, and at least a part of the top side and rear side of the non-contoured wood sheet is adapted to the shape of the surface of the support.

The term *"support"* encompasses any means, which is suitable to accommodate the wood sheet provided in step (i) according to step (ii), preferably such that said wood sheet is at least partially adapted to the surface of the support. Preferably, the support is made from a material selected from wood, metal or plastics. Plastics in the form of a foam such as a rigid foam are preferred.

The term *"clamping device"* encompasses a device by means of which the non-contoured wood sheet, preferably a veneer, may be fixed and may be detached from the support.

In a sixth embodiment, the shape of the surface of the support is curved or tapered. Accordingly, when the thickness is reduced according to step (ii), preferably mechanically reduced, more preferably reduced by sanding, the intermediate sheet is formed such that it also has a curved or tapered form, at least partially.

In a seventh embodiment of the method according to the invention, the gluing according to step (iv) is performed as compression molding in a compression-molding device. Preferably, the gluing is performed such to apply a uniform pressure to the wood sheets to be glued.

In an eights embodiment of the method according to the invention, step (iv) comprises the gluing of from 200 to 1500 intermediate wood sheets obtained in step (ii). In a preferred embodiment from 200 to 1000 intermediate wood sheets are glued with one another, further preferred 400 to 800 intermediate wood sheets are glued with one another.

In a ninth embodiment of the method according to the invention, step (iii) comprises step (iii'):
(iii') gluing the top side or the rear side of the intermediate wood sheet obtained in step (ii), or gluing the top side or the rear side of the wood sheet provided in step (i), with a material different from wood.

Preferably, the material different from wood may be provided in the form of a sheet, the sheet having a top side and a rear side. The thickness of the sheet may be freely selected. Preferably, the thickness ranges from 0.1 to 5 mm, more preferred of from 0.15 to 2 mm.

In an alternative, the material may have the thickness of the wood sheet provided in step (i), i.e. of from 0.1 mm to 3 mm, preferably of from about 0.45 mm to 2.5 mm, more preferably of from 0.45 mm to 0.8 mm.

The sheet may also be provided in the form of a foil or as a veneer sheet with vlies or paper-back.

Preferably, the materials being different from wood are metals or metal alloys, in particular aluminum or aluminum alloys or copper or copper alloys. In an alternative, also organic material such as plastics of any type has to be mentioned, in particular polyolefins such as polypropylene or copolymers with such polyolefins. In a preferred embodiment, the material being different from wood is an urethane such as a polyurethane or comprises an urethane such as a polyurethane.

The incorporation of such material may further improve the mechanical stability of the contoured wood sheet prepared according to the method of the invention.

In a tenth embodiment of the method according to the invention, the method comprises after step (iv) step (v):
(v) processing the contoured wood sheet obtained in step (iv).

Processing may be selected from clipping the edges of the contoured wood sheet made in the method according to the invention, drilling or cutting holes into the contoured wood sheet, deforming the contoured wood sheet, e.g. by compression-molding, dyeing the contoured wood sheet, and/or coating the contoured wood sheet.

Each of said embodiments may be combined with at least another one of said embodiments.

### Second Aspect of the Invention

According to a ***second aspect**,* the invention relates to a contoured wood sheet, the contoured wood sheet having a length, a height and a width, and a top side and a rear side, which are spaced apart from one another by the height; wherein the width varies across at least a part of the length to define the contour of the contoured wood sheet; and the contoured wood sheet comprises wood elements, the wood elements having the length and the height of the contoured wood sheet; wherein the width of at least one wood element varies across its length; wherein wood elements are glued together via the edges extending in the direction of the length of the wood elements.

Preferably, the contoured wood sheet according to the ***second aspect*** of the invention is obtainable by a process as defined in the method according to the first aspect of the invention and / or according to the respective embodiments defined therein.

Accordingly, the invention relates to a contoured wood sheet, the contoured wood sheet having a length, a height and a width, and a top side and a rear side, which are spaced apart from one another by the height; wherein the width varies across at least a part of the length to define the contour of the contoured wood sheet; and the contoured wood sheet comprises wood elements, the wood elements having the length and the height of the contoured wood sheet; wherein the width of at least one wood element varies across its length; wherein wood elements are glued together via the edges extending in the direction of the length of the wood elements; obtainable by a method comprising at least steps (i) to (iv):
(i) providing wood sheets, the wood sheets having a front edge and a rear edge, and a top side and a rear side extending between the front edge and the rear edge, wherein the top side and the rear side are spaced apart from one another by a uniform thickness, respectively;
(ii) reducing the thickness between the top side and the rear side in at least a part of at least one wood sheet provided in step (i) such that the sheet has in at least a part of the top side or the rear side, or the top side and the rear side, a tapered or a curved form, whereby an intermediate wood sheet is obtained;
(iii) gluing the intermediate sheet obtained in step (ii) to another intermediate sheet obtained in step (ii); wherein the gluing is performed such that a top side is glued to a rear side, wherein an adhesion layer is formed between said top side and said rear side; or a top side is glued to a top side, wherein an adhesion layer is formed between said top sides; whereby a block of wood is obtained comprising intermediate sheets from step (ii), which are glued together;
(iv) slicing the block obtained in step (iii) such that the slicing plane extends perpendicularly to said adhesion layers, whereby the contoured wood sheet is obtained.

### Third Aspect of the Invention

According to a ***third aspect**,* the invention relates to a block, the block comprising wood sheets, wherein the wood sheets have a front edge and a rear edge, and a top side and a rear side extending between the front edge and the rear edge, wherein the top side and the rear side are spaced apart from one another by a thickness; and wherein the top side of a wood sheet is glued to the top side or rear side of another wood sheet; wherein at least one wood sheet has in at least a part of the top side or the rear side, or the top side and the rear side, a tapered or a curved form.

In a first embodiment, the block has an irregular shape.

The term *"irregular shape"* encompasses a form that is different from a cuboid or cuboids.

In a second embodiment, the block is fan-shaped.

Preferably, the block according to the ***third aspect*** of the invention is obtainable by a process as defined in the method according to the ***first aspect*** of the invention and / or according to the respective embodiments defined therein with respect to steps (i) to (iii).

Accordingly, the invention relates to a block, the block comprising wood sheets, wherein the wood sheets have a front edge and a rear edge, and a top side and a rear side extending between the front edge and the rear edge, wherein the top side and the rear side are spaced apart from one another by a thickness; and wherein the top side of a wood sheet is glued to the top side or rear side of another wood sheet; wherein at least one wood sheet has in at least a part of the top side or the rear side, or the top side and the rear side, a tapered or a curved form; obtainable by a process, comprising at least steps (i) to (iii):
(i) providing wood sheets, the wood sheets having a front edge and a rear edge, and a top side and a rear side extending between the front edge and the rear edge, wherein the top side and the rear side are spaced apart from one another by a uniform thickness, respectively;
(ii) reducing the thickness between the top side and the rear side in at least a part of at least one wood sheet provided in step (i) such that the sheet has in at least a part of the top side or the rear side, or the top side and the rear side, a tapered or a curved form, whereby an intermediate wood sheet is obtained;
(iii) gluing the intermediate sheet obtained in step (ii) to another intermediate sheet obtained in step (ii); or gluing the intermediate sheet obtained in step (ii) to a wood sheet provided in step (i); wherein the gluing is performed such that a top side is glued to a rear side, wherein an adhesion layer is formed between said top side and said rear side; or a top side is glued to a top side, wherein an adhesion layer is formed between said top sides; whereby a block of wood is obtained comprising intermediate sheets from step (ii), or intermediate sheets from step (ii) and sheets from step (i), which are glued to one another.

The block may consist of intermediate sheets only or may comprise intermediate sheets obtained according to step (ii).

In an alternative, the block may consist of intermediate sheets obtained according to step (ii) and wood sheets provided in step (i), or may comprise intermediate sheets obtained according to step (ii) and wood sheets provided in step (i).

In a further alternative, the block may consist of intermediate sheets obtained according to step (ii) and wood sheets provided in step (i) and sheets of a material different from wood, or may comprise intermediate sheets obtained according to step (ii) and wood sheets provided in step (i) and sheets of a material different from wood.

In a further alternative, the block may consist of intermediate sheets obtained according to step (ii) and sheets of a material different from wood, or may comprise intermediate sheets obtained according to step (ii) and sheets of a material different from wood.

### Fourth Aspect of the Invention

According to a ***fourth aspect**,* the invention relates to a device for performing step (ii) as defined in the first aspect of the invention.

The device comprises:
(a) a support comprising an at least partially curved surface for at least partially adapting the top side and the rear side of a wood sheet provided in step (i) to said at least partially curved surface, the wood sheet having a front edge and a rear edge, and a top side and a rear side extending between the front edge and the rear edge, wherein the top side and the rear side are spaced apart from one another by a thickness;
(b) clamping means arranged on said support for fixing the said wood sheet on the support to allow the wood sheet to be at least partially adapted to the curved surface of the support;
(c) means for mechanically reducing the thickness between the top side and rear side in at least a part of the wood sheet, preferably means for sanding, milling or planing, more preferably means for sanding, wherein said means is / are arranged above the at least partially curved surface.

Preferably, means (c) are sanding means such as a sander, particularly a sander which is controlled by a CNC machine.

### Figures

- **Fig. 1**: shows a perspective view of a contoured wood sheet according to the invention.
- **Fig. 2**: shows a perspective view of another contoured wood sheet according to the invention.
- **Fig. 3**: shows a perspective view of a wood sheet provided in step (i) of the method according to the invention.
- **Fig. 4**: shows a perspective view of an intermediate wood sheet obtained in step (ii) of the method according to the invention.
- **Fig. 5**: shows a perspective view of a block according to the invention obtained in step (iii), and from which the contoured wood sheet is obtained by slicing according to step (iv).
- **Fig. 6a**: shows a perspective view of another block according to the invention obtained in step (iii), and from which the contoured wood sheet is obtained by slicing according to step (iv).
- **Fig. 6b**: shows a perspective view of the block of **Fig. 6a****,** in which edges have been clipped.
- **Fig. 7**: shows a perspective view of another block according to the invention obtained in step (iii), and from which the contoured wood sheet is obtained by slicing according to step (iv).
- **Fig. 8**: shows a lateral view of a device for performing step (ii).
- **Fig. 9**: shows a perspective view of a compression-molding device for performing step (iii) of the method according to the invention.
- **Fig. 10a**: shows a perspective view of a block made according to step (iii) according to the method of the invention using the compression molding device of **Fig. 9**.
- **Fig. 10b**: shows a contoured veneer sheet obtained from the block of Fig.10a according to step (iv) of the method according to the invention.

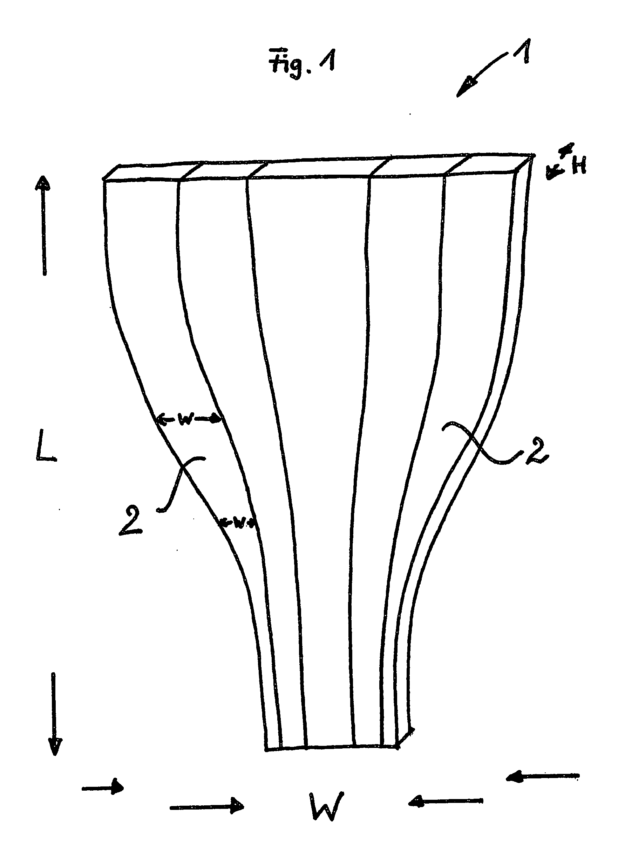

The contoured wood sheet 1 of **Fig. 1** made according to the method of the invention has a length L, a height H and a width W, and a top side and a rear side, which are spaced apart from one another by the height H, wherein the width W varies across at least a part of the length L to define the contour of the contoured wood sheet 1. The contoured wood sheet 1 is composed of wood elements 2, wherein the wood elements 2 have the length L and the height H of the contoured wood sheet 1, wherein the width w of at least one wood element varies across its length L. The wood elements 2 are present in the contoured wood sheet 1 such that the wood elements 2 are glued together via edges extending in the direction of the length L of the wood elements.

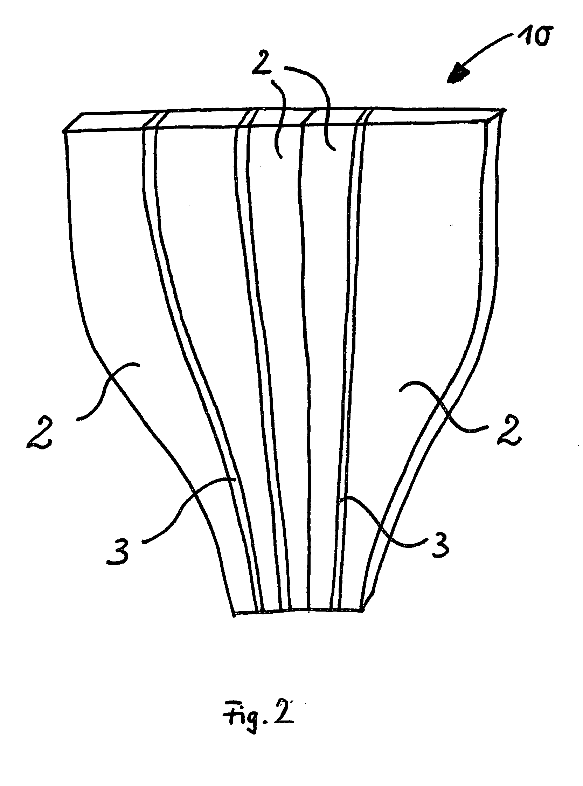

The contoured wood sheet 10 of **Fig. 2** made according to the method of the invention is composed of wood elements 2. Additionally, contoured wood sheet 10 contains elements 3, which are made from a material different of wood. This material different from wood may e.g. be aluminum or a polyurethane.

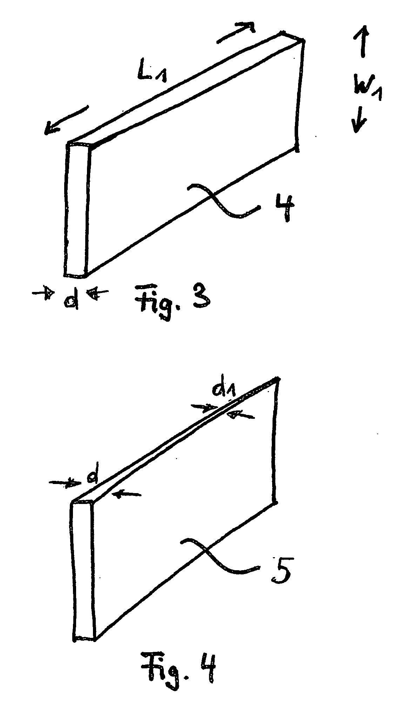

**Fig. 3** shows a perspective view of a wood sheet 4 provided in step (i) of the method according to the invention. A top side and a front side extend between the front edge and the rear edge. The front edge and the rear edge are spaced apart by a distance or thickness d. This distance or thickness d is constant across the whole length L₁. Wood sheet 5 is a non-contoured wood sheet, i.e. the width W₁ of the sheet does not vary across the length L₁.

**Fig. 4** shows a perspective view of an intermediate wood sheet 5 obtained in step (ii) of the method according to the invention. The sheet has a tapered form, i.e. the thickness d in the wood sheet 4 of **Fig. 3** has been reduced between the top side and the rear side in at least a part of wood sheet 4.

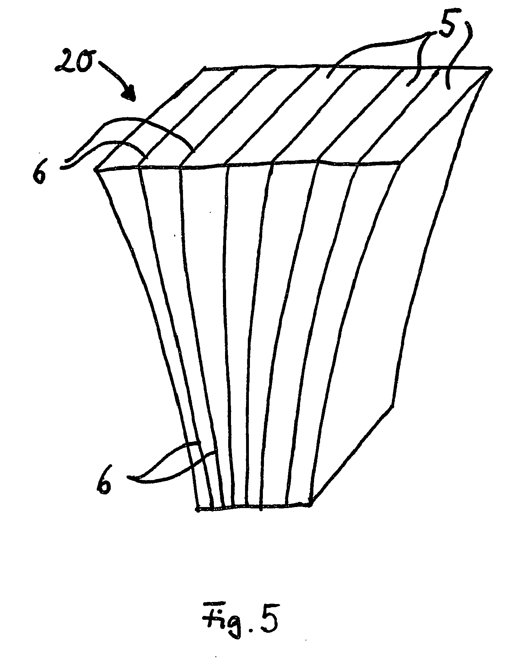

**Fig. 5** shows a perspective view of a block 20 according to the invention obtained in step (iii) of the method according to the invention. The block is composed of intermediate wood sheets 5 from **Fig. 4** such that it has a fan-shaped form. The top sides and rear sides that are glued with one another define adhesion layers 6. The edges of the block have been clipped or sanded such that they form two parallel planes. The distance between these planes defines the length of the contoured wood sheet that is made by slicing block 20.

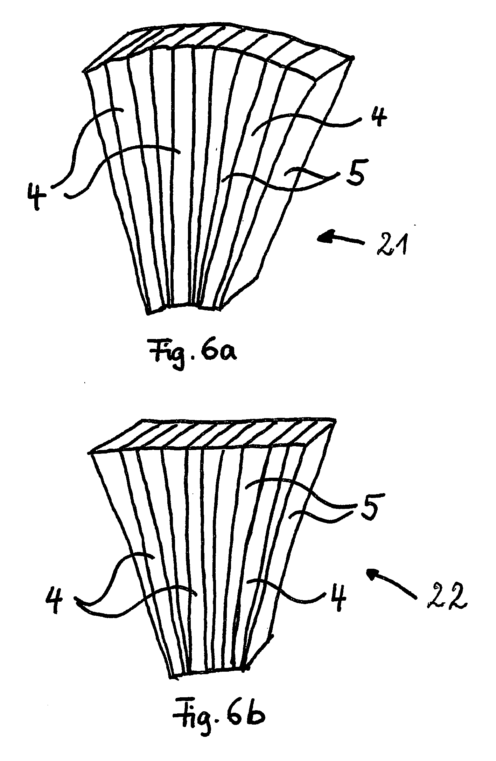

**Fig. 6a** shows a block 21 which is composed of wood sheets 4 and intermediate sheets 5. In one embodiment, wood sheets 4 and 5 are made from different types of wood. In another embodiment, wood sheet 4 has been dyed prior to the gluing.

**Fig. 6b** shows a block 22, which is obtained from block 21, wherein edges of block 21 have been clipped.

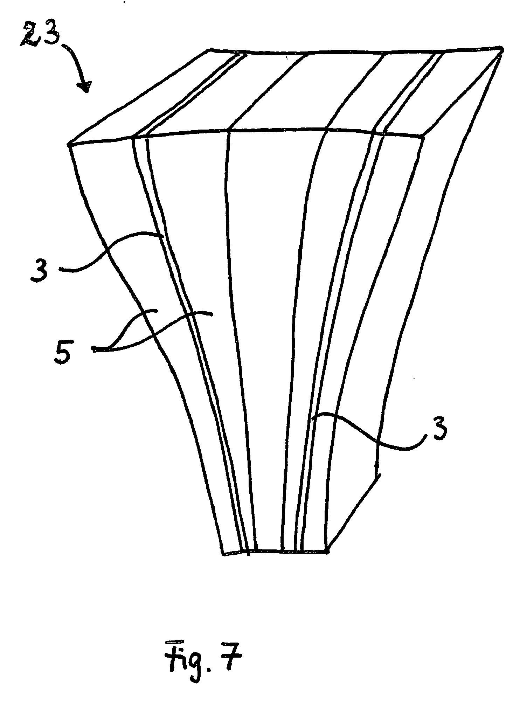

**Fig. 7** shows a block 23. Block 23 is composed of intermediate wood sheets 5 and contains sheets 3 of a material that is different from wood.

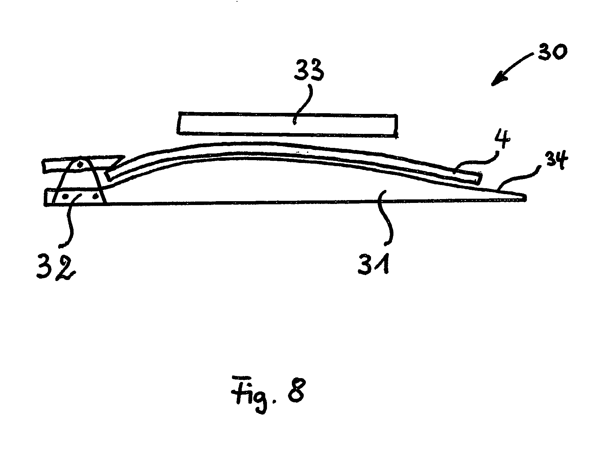

**Fig. 8** shows a device 30 for performing step (ii) of the method according to the invention. Device 30 has a support 31 comprising an at least partially curved surface 34 for at least partially adapting the top side and the rear side of a wood sheet 4 provided in step (i) to said at least partially curved surface 34, the wood sheet 4 having a front edge and a rear edge, and a top side and a rear side extending between the front edge and the rear edge, wherein the top side and the rear side are spaced apart from one another by a thickness. Device 30 has clamping means 32 arranged on said support 31 for fixing the said wood sheet 4 on the support 31 to allow the wood sheet 4 to be at least partially adapted to the curved surface 34 of the support 31. Means 33 for mechanically reducing the thickness of wood sheet 4, such as means for sanding, milling or planing, preferably means for sanding, are arranged above the at least partially curved surface for reducing the thickness between the top side and rear side of the wood sheet 4. In one embodiment, means 33 are means for sanding such as a sander, which a CNC machine controls.

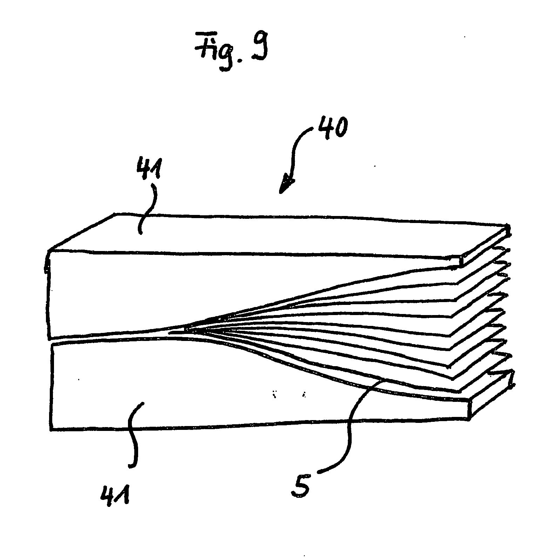

**Fig. 9** shows a perspective view of a compression-molding device 40 for performing step (iii) of the method according to the invention. Device 40 comprises two forming means 41 between which intermediate wood sheets 5 are arranged. Wood sheets 5 are provided with glue and stacked one upon the other in device 40. The two forming means 41 are inversely arranged. Upon exerting pressure on the stack by means of forming means 41, wood sheets 5 are glued with one another. In one embodiment, the pressure in device 40 is uniform. This means that intermediate wood sheets 5 are glued to one another under a uniform pressure.

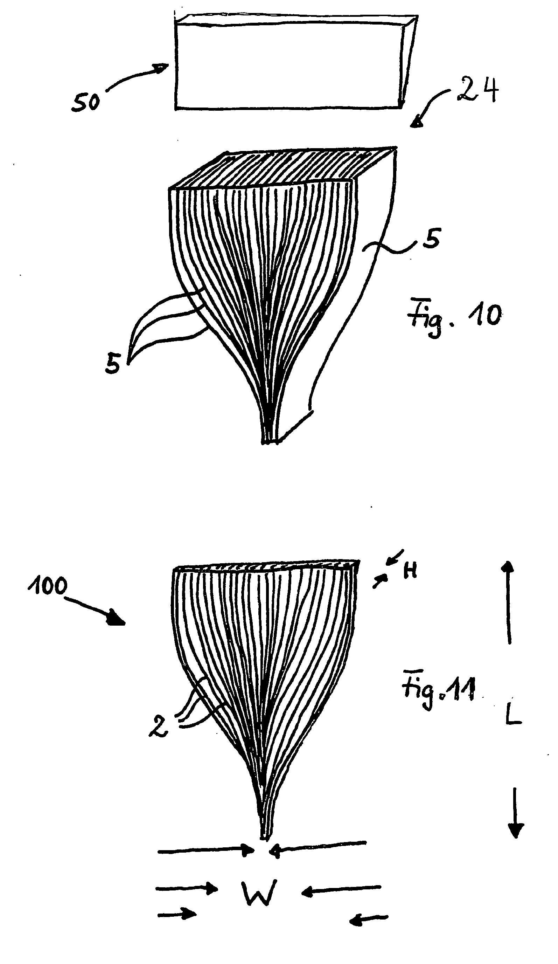

**Fig. 10** shows a perspective view of block 24 made according to step (iii) according to the method of the invention using the compression-molding device of **Fig. 9**. The block is composed of a multitude of wood sheets 5, e.g. of 600 intermediate sheets.

**Fig. 11** shows a contoured veneer sheet 100 obtained from block 24 of **Fig. 10** by slicing with a blade 50 according to step (iv). The contoured wood sheet is composed of a multitude of wood elements 2, which have the length L of the contoured wood sheet 100 and the height H thereof. The width W of the sheet varies across its length L.

### Reference numerals:

- 1, 10, 100: contoured wood sheet
- 2: wood element
- 3: material different from wood
- 4: wood sheet
- 5: intermediate wood sheet

- 20, 21, 22, 23, 24: block
- 6: adhesion layer

- 30: device for performing step (ii)
- 31: support
- 32: clamping means
- 33: means for mechanically reducing the thickness of wood sheet 4
- 34: surface of the support

- 40: compression device for performing step (iii)
- 41: forming means

- 50: blade

- L: length of contoured wood sheet 1, 10, 100; length of wood element 2
- W: width of contoured wood sheet 1, 10, 100
- H: height of contoured wood sheet 1, 10, 100; height of wood element 2
- w: width of wood element 2
- d: thickness of wood sheet 4
- d₁: varying thickness of intermediate wood sheet 5
- L₁: length of wood sheet 4
- W₁: width of wood sheet 4

## Claims

1. Method of making a contoured wood sheet (1, 10, 100), the contoured wood sheet (1, 10, 100) having a length (L), a height (H) and a width (W), and a top side and a rear side, which are spaced apart from one another by the height (H); wherein the width (W) varies across at least a part of the length (L) to define the contour of the contoured wood sheet (1, 10, 100); and the contoured wood sheet (1, 10, 100) comprises wood elements (2), the wood elements (2) having the length (L) and the height (H) of the contoured wood sheet (1, 10, 100); wherein the width (w) of at least one wood element (2) varies across its length (L); wherein wood elements (2) are glued together via the edges extending in the direction of the length (L) of the wood elements; the method comprising at least steps (i) to (iv):
(i) providing wood sheets (4), the wood sheets (4) having a front edge and a rear edge, and a top side and a rear side extending between the front edge and the rear edge, wherein the top side and the rear side are spaced apart from one another by a thickness (d), respectively;
(ii) reducing the thickness (d) between the top side and the rear side in at least a part of at least one wood sheet (4) provided in step (i) such that the sheet has in at least a part of the sheet a tapered or a curved form, whereby an intermediate wood sheet (5) is obtained;
(iii) gluing the intermediate wood sheet (5) obtained in step (ii) to another intermediate sheet (5) obtained in step (ii); or gluing the intermediate sheet (5) obtained in step (ii) to a wood sheet (4) provided in step (i); such that a top side is glued to a rear side, wherein an adhesion layer (6) is formed between said top side and said rear side; or a top side is glued to a top side, wherein an adhesion layer (6) is formed between said top sides; whereby a block (20, 21, 22, 23, 24) of wood comprising intermediate wood sheets (5), or intermediate wood sheets (5) and wood sheets (4) is obtained, which are glued to one another;
(iv) slicing the block (20, 21, 22, 23, 24) obtained in step (iii) such that the slicing plane extends perpendicularly to said adhesion layers (6), whereby the contoured wood sheet (1, 10, 100) is obtained.

2. Method of claim 1, wherein the contoured wood sheet (1, 10, 100) is a veneer sheet.

3. Method of claim 1 or 2, wherein the wood sheet (4) provided in step (i) is a veneer sheet.

4. Method of claim 3, wherein the veneer sheet has a thickness of from 0.1 to 3 mm; or wherein the veneer sheet has a thickness of from 0.1 to 3 mm and a length of from 50 to 300 cm and a width of from 2 to 20 cm.

5. Method of any one of the preceding claims, wherein the reducing of the thickness (d) between the top side and the rear side of the wood sheet (4) in step (ii) comprises mechanically reducing the thickness (d) of at least a part of the top side of the wood sheet (4).

6. Method of any one of the preceding claims, wherein the reducing of the thickness (d) between the top side and the rear side of at least a part of the wood sheet (4) in step (ii) comprises mechanically reducing the thickness (d) of at least a part of the rear side of the wood sheet (4).

7. Method of any one of the preceding claims, wherein in step (ii) wood sheet (4) is provided on a device (30), the device comprising a support (31), the support (31) comprising a surface (34) for at least partially adapting the top side and the rear side of wood sheet (4) provided in step (i) to said surface, and clamping means (32); and wood sheet (4) is fixed in the clamping means (32) such that the front edge or rear edge is clamped into the clamping means (32), and at least a part of the top side and rear side of wood sheet (4) is adapted to the shape of the surface (34) of support (31).

8. Method of claim 7, wherein the surface (34) is at least partially curved.

9. Method of any one of the preceding claims, wherein the gluing according to step (iv) is performed as compression molding in a compression-molding device (40).

10. Method of any one of the preceding claims, wherein step (iv) comprises the gluing of from 200 to 1500 intermediate wood sheets (5) obtained in step (ii).

11. Method of any one of the preceding claims, wherein step (iii) comprises step (iii'):
(iii') gluing the top side or the rear side of the intermediate wood sheet (5) obtained in step (ii), or gluing the top side or the rear side of wood sheet (5) provided in step (i), with a material (3) different from wood.

12. Method of any one of the preceding claims, comprising after step (iv) step (v):
(v) processing the contoured wood sheet (1, 10, 100) obtained in step (iv).

13. Contoured wood sheet (1, 10, 100), the contoured wood sheet (1, 10, 100) having a length (L), a height (H) and a width (W), and a top side and a rear side, which are spaced apart from one another by the height (H); wherein the width (W) varies across at least a part of the length (L) to define the contour of the contoured wood sheet (1, 10, 100); and the contoured wood sheet (1, 10, 100) comprises wood elements (2), the wood elements (2) having the length (L) and the height (H) of the contoured wood sheet (1, 10, 100); wherein the width (w) of at least one wood element (2) varies across its length (L); wherein wood elements (2) are glued together via the edges extending in the direction of the length (L) of the wood elements.

14. Block (20, 21, 22, 23, 24), the block comprising wood sheets (4, 5) wherein the wood sheets (4, 5) have a front edge and a rear edge, and a top side and a rear side extending between the front edge and the rear edge, wherein the top side and the rear side are spaced apart from one another by a thickness (d); and wherein the top side of a wood sheet (4, 5) is glued to the top side or rear side of another wood sheet (4, 5); wherein in at least one wood sheet (5) the thickness (d) between the top side and the rear side is reduced such that it has in at least a part of the sheet a tapered or a curved form.

15. Device (30) for performing step (ii) as defined in claim 1, the device (30) comprising:
a) a support (31) comprising an at least partially curved surface (34) for at least partially adapting the top side and the rear side of a wood sheet (4) provided in step (i) to said at least partially curved surface (34), the wood sheet (4) having a front edge and a rear edge, and a top side and a rear side extending between the front edge and the rear edge, wherein the top side and the rear side are spaced apart from one another by a thickness (d);
(b) clamping means (32) arranged on said support (31) for fixing the said wood sheet (4) on the support (31) to allow wood sheet (4) to be at least partially adapted to the curved surface (34) of support (31);
(c) means (33) for mechanically reducing the thickness (d) between the top side and rear side in at least a part of wood sheet (4), wherein said means are arranged above the at least partially curved surface (34).

## Amended claims

### Amended claims in accordance with Rule 137(2) EPC.

**1.** Method of making a contoured wood sheet (1, 10, 100), the contoured wood sheet (1, 10, 100) having a length (L), a height (H) and a width (W), and a top side and a rear side, which are spaced apart from one another by the height (H); wherein the width (W) varies across at least a part of the length (L) to define the contour of the contoured wood sheet (1, 10, 100); and the contoured wood sheet (1, 10, 100) comprises wood elements (2), the wood elements (2) having the length (L) and the height (H) of the contoured wood sheet (1, 10, 100); wherein the width (w) of at least one wood element (2) varies across its length (L); wherein wood elements (2) are glued together via the edges extending in the direction of the length (L) of the wood elements; the method comprising at least steps (i) to (iv):
(i) providing wood sheets (4), the wood sheets (4) having a front edge and a rear edge, and a top side and a rear side extending between the front edge and the rear edge, wherein the top side and the rear side are spaced apart from one another by a thickness (d), respectively;
(ii) reducing the thickness (d) between the top side and the rear side in at least a part of at least one wood sheet (4) provided in step (i) such that the sheet has in at least a part of the sheet a tapered or a curved form, whereby an intermediate wood sheet (5) is obtained;
(iii) gluing the intermediate wood sheet (5) obtained in step (ii) to another intermediate sheet (5) obtained in step (ii); or gluing the intermediate sheet (5) obtained in step (ii) to a wood sheet (4) provided in step (i); such that a top side is glued to a rear side, wherein an adhesion layer (6) is formed between said top side and said rear side; or a top side is glued to a top side, wherein an adhesion layer (6) is formed between said top sides; whereby a block (20, 21, 22, 23, 24) of wood comprising intermediate wood sheets (5), or intermediate wood sheets (5) and wood sheets (4) is obtained, which are glued to one another;
(iv) slicing the block (20, 21, 22, 23, 24) obtained in step (iii) such that the slicing plane extends perpendicularly to said adhesion layers (6), whereby the contoured wood sheet (1, 10, 100) is obtained;
wherein the contoured wood sheet (1, 10, 100) is a veneer sheet having a thickness of from 0.1 mm to 3 mm.

**2.** Method of claim 1, wherein the wood sheet (4) provided in step (i) is a veneer sheet.

**3.** Method of claim 2, wherein the veneer sheet has a thickness of from 0.1 to 3 mm;
or wherein the veneer sheet has a thickness of from 0.1 to 3 mm and a length of from 50 to 300 cm and a width of from 2 to 20 cm.

**4.** Method of any one of the preceding claims, wherein the reducing of the thickness (d) between the top side and the rear side of the wood sheet (4) in step (ii) com-prises mechanically reducing the thickness (d) of at least a part of the top side of the wood sheet (4).

**5.** Method of any one of the preceding claims, wherein the reducing of the thickness (d) between the top side and the rear side of at least a part of the wood sheet (4) in step (ii) comprises mechanically reducing the thickness (d) of at least a part of the rear side of the wood sheet (4).

**6.** Method of any one of the preceding claims, wherein in step (ii) wood sheet (4) is provided on a device (30), the device comprising a support (31), the support (31) comprising a surface (34) for at least partially adapting the top side and the rear side of wood sheet (4) provided in step (i) to said surface, and clamping means (32); and wood sheet (4) is fixed in the clamping means (32) such that the front edge or rear edge is clamped into the clamping means (32), and at least a part of the top side and rear side of wood sheet (4) is adapted to the shape of the surface (34) of support (31).

**7.** Method of claim 6, wherein the surface (34) is at least partially curved.

**8.** Method of any one of the preceding claims, wherein the gluing according to step (iv) is performed as compression molding in a compression-molding device (40).

**9.** Method of any one of the preceding claims, wherein step (iv) comprises the gluing of from 200 to 1500 intermediate wood sheets (5) obtained in step (ii).

**10.** Method of any one of the preceding claims, wherein step (iii) comprises step (iii'):
(iii') gluing the top side or the rear side of the intermediate wood sheet (5) obtained
in step (ii), or gluing the top side or the rear side of wood sheet (5) provided in step (i), with a material (3) different from wood.

**11.** Method of any one of the preceding claims, comprising after step (iv) step (v):
(v) processing the contoured wood sheet (1, 10, 100) obtained in step (iv).

**12.** Contoured wood sheet (1, 10, 100), the contoured wood sheet (1, 10, 100) having a length (L), a height (H) and a width (W), and a top side and a rear side, which are spaced apart from one another by the height (H); wherein the width (W) varies across at least a part of the length (L) to define the contour of the contoured wood sheet (1, 10, 100); and the contoured wood sheet (1, 10, 100) comprises wood elements (2), the wood elements (2) having the length (L) and the height (H) of the contoured wood sheet (1, 10, 100); wherein the width (w) of at least one wood element (2) varies across its length (L); wherein wood elements (2) are glued together via the edges extending in the direction of the length (L) of the wood elements; wherein the contoured wood sheet (1, 10, 100) is a veneer sheet having a thickness of from 0.1 mm to 3 mm.
